(19) Europäisches Patentamt
European Patent Office
Office européen des brevets

(11) Veröffentlichungsnummer: **0 361 085 B1**

(12) **EUROPÄISCHE PATENTSCHRIFT**

(45) Veröffentlichungstag der Patentschrift: **24.03.93**

(51) Int. Cl.$^5$: **B01D 69/00**, B01D 71/68

(21) Anmeldenummer: **89115622.6**

(22) Anmeldetag: **24.08.89**

# (54) Integrale asymmetrische Polyäthersulfonmembran, Verfahren zur Herstellung und Verwendung zur Ultrafiltration und Mikrofiltration.

(30) Priorität: **01.09.88 DE 3829752**

(43) Veröffentlichungstag der Anmeldung:
**04.04.90 Patentblatt 90/14**

(45) Bekanntmachung des Hinweises auf die Patenterteilung:
**24.03.93 Patentblatt 93/12**

(84) Benannte Vertragsstaaten:
**DE ES FR GB IT NL SE**

(56) Entgegenhaltungen:
**EP-A- 0 201 604**
**GB-A- 2 047 162**
**NL-A- 8 303 110**

(73) Patentinhaber: **Akzo N.V.**
**Postbus 9300 Velperweg 76**
**NL-6800 SB Arnhem(NL)**

(72) Erfinder: **Wechs, Friedbert**
**Bayernstrasse 26**
**W-8767 Wörth(DE)**

(74) Vertreter: **Fett, Günter**
**Akzo Patente GmbH Kasinostrasse 19 - 23**
**W-5600 Wuppertal 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 361 085 B1

## Beschreibung

Die Erfindung betrifft eine integrale Polyäthersulfonmembran mit einem an den äußeren Begrenzungen offenen Porensystem in Form von Flachfolien, Schlauchfolien oder Hohlfäden mit einer maximalen Porendurchmesser von 0,02 µm bis 2 µm, gemessen mit der Blaspunktmethode, sowie ein Verfahren zur Herstellung der Membran und ihre Verwendung zur Ultrafiltration und Mikrofiltration.

Aus der EP 121 911-A1 ist eine Filtermembran aus einem Polysulfon in Form eines Hohlfadens mit einer Netzwerk-Struktur über die gesamte Dicke von der inneren zur äußeren Oberfläche bekannt, bei der die Poren einen maximalen Porendurchmesser von 0,1 bis 5 µm haben und die Porenöffnungen an der inneren Oberfläche einen maximalen Durchmesser von 0,01 bis 10 µm und die Öffnungen der Poren, die in der äußeren Oberfläche gebildet werden, einen maximalen Durchmesser von 0,01 bis 5 µm haben.

Obwohl die Porenstruktur als eine einheitliche Netzwerk-oder Schwamm-Struktur bezeichnet wird, wird eine breite Verteilung der Durchmesser der Öffnungen im Bereich der äußeren Wandoberfläche in einem vergrößerten Schnittbild der Hohlfaser dargestellt. Die bekannte Membran enthält keine Haut in der nur engere Poren als in der Schwamm-Struktur existieren, sondern nach außen aufgebrochene sehr unterschiedliche Öffnungen der Netzwerk- bzw. Schwamm-Struktur.

Aus der EP 228 072-A2 ist eine Filtermembran bekannt, die dadurch gekennzeichnet ist, daß das die Membran bildende Polymer als solches hydrophob ist und eine Wasseraufnahmefähigkeit von etwa 2 bis 4% besitzt und die gebildete Membran hydrophil ist, eine Porengröße von 0,02 µm bis 20µm aufweist und bei einem gegebenen Blaspunkt eine hohe Wasserflußgeschwindigkeit aufweist.
Vorzugsweise ist das Polymer ein Polyäthersulfon und enthält Zusätze von Polyäthylenglykol oder Polyvinylpyrrolidon.

Bei dem Verfahren zur Herstellung von Poren aufweisenden Formkörpern gemäß DE-Patent 33 27 638 wurde bereits ein poröser Polyamid-6-Hohlfaden aus einem Gemisch aus Polyamid-6, ε-Caprolactam und Polyäthylenglykol 300 hergestellt. Die Verformung erfolgte bei einer Düsentemperatur von 210°C. Die Spinnlösung war homogen und dünnviskos und wurde deshalb in ein U-förmiges Abkühlrohr extrudiert, in dem die mechanische Belastung, der die Polymermischung bis zum Zeitpunkt der beginnenden Erstarrung, also beginnender Formstabilität ausgesetzt ist, gering gehalten wird.

Die aus EP 121 911-A1 und EP 228 072-A1 bekannten Membranen werden aus Lösungen des Polymeren in aprotischen Lösungsmitteln durch bekannte Membranbildungsverfahren gebildet. Aprotische Lösungsmittel sind beispielsweise Dimethylacetamid, Dimethylformamid oder N-Methylpyrrolidon. Die Polymergehalte der Lösungen sind ausgesprochen gering. Deshalb sind auch die Viskositäten gering und es werden bevorzugt dünnwandige und mechanisch weniger stabile Membranen erzeugt. Die bekannten Membranen sind praktisch symmetrisch, was bedingt, daß der Membranfluß deutlich mit der Dicke der Membran abnimmt.

Aufgabe der vorliegenden Erfindung war es, eine chemisch insbesondere gegen Oxidationsmittel, stabile, temperaturbeständige Filtrationsmembran mit einem an den äußeren Begrenzungen offenen Porensystem zur Verfügung zu stellen, deren besondere Flußcharakteristik darin besteht, daß sie bei gleichem Strukturaufbau einen von der Membrandicke weitgehend unabhängigen Wasserfluß ermöglicht.

Gelöst wird diese Aufgabe durch eine integrale Polyäthersulfonmembran, die dadurch gekennzeichnet ist, daß das Porensystem durchgehend zellförmig mit polyedrisch symmetrisch begrenzten Zellen ist und die Zellen innerhalb der Wand von einer zur anderen Begrenzung der Wand asymmetrisch angeordnet sind, wobei der auf den maximalen Porendurchmesser bezogenen Asymmetriefaktor AF 0,01 bis 2,0 beträgt, und das Verhältnis der maximalen mittleren freien Weglänge des Strömungsweges zum Durchmesser der maximalen Poren größer als 3 ist und von einer Oberfläche zur anderen Oberfläche die Zellgröße sich gleichmäßig ändert. Der maximale Porendurchmesser wird mittels der Blaspunktmethode (ASTM Nr. 128-61 und F 316-70) bestimmt, wozu beispielsweise die in der DE 36 17 724-A1 beschriebene Methode geeignet ist. Dabei ergibt sich $d_{max}$ aus dem zum Blaspunkt gehörenden Gasraumdruck $P_B$ nach der Formel

$$d_{max} = \sigma_B / P_B.$$

Hierbei ist $\sigma_B$ eine Konstante, die hauptsächlich der benetzenden Flüssigkeit zu eigen ist. Die Werte für $\sigma_B$ betragen beispielsweise bei 25°C für Isopropanol 0,611 µm • bar und für $H_2O$ 2,07 µm • bar.

Im Gegensatz zu symmetrischen Membran aus dem Stand der Technik, beispielsweise hergestellt gemäß DE-OS28 33 493, besteht bei erfindungsgemäßen Membranen eine wesentlich geringere Abhängigkeit des Flußes von der Membrandicke.

Fig. 1 zeigt ein Diagramm in dem Gerade 1 der aus der DE 28 33 493-A1 bekannten Membran entspricht. Gerade 2 entspricht der erfindungsgemäßen Membran (hergestellt nach Beispiel 1).

Die Asymmetrie im Membranquerschnitt ist durch den auf den maximalen Porendurchmesser bezogenen Asymmetriefaktor AF charakterisiert, wobei

$$AF = \frac{LS_{max}}{S_{max} \cdot d_{max}} \quad [\mu m^{-1}]$$

LS ist die mittlere freie Weglänge des Strömungsweges in der Membran zwischen den Zellwänden, die an einer TEM-Aufnahme des Membranquerschnitts bei einer Vergrößerung von 4100-fach mit einem Bildauswertesystem, beispielsweise Quantiment 970, an jeweils einem bestimmten Abstand S von der Membranwand ermittelt wird.

$LS_{max}$ ist die entsprechende maximale freie Weglänge bei einer Membran und der zugehörige Abstand von der Membranwand ist als $S_{max}$ bezeichnet. Der sich ergebende Quotient ist auf den durch Blaspunktbestimmung ermittelten maximalen Porendurchmesser $d_{max}$, der für den Transmembranfluß bestimm end ist, bezogen.

Die Transmissions-Elektronenmikroskopaufnahme wird an Dünnschnitten quer zur Wand mit einer Schnittdicke von 80 nm vorgenommen. Zur Herstellung der Schnitte wird die Membran in Methacrylat eingebettet und dieses nach dem Schneiden mit Tetrachlorkohlenstoff ausgewaschen.

Die bei verschiedenen Abständen von der Membranwand ermittelten mittleren freien Weglängen werden in Abhängigkeit von dem zugehörigen Abstand von der Außenwand graphisch aufgetragen. Die Meßwerte lassen sich in einer stetigen Kurve mit einem Maximum darstellen. Der Asymmetriefaktor AF ergibt sich dann aus der maximalen mittleren freien Weglänge und Abstand des Maximums von der Wand und dem maximalen Porendurchmesser.

Die zu Beispiel 1C gehörenden Werte sind nachfolgend tabellarisch aufgeführt und in Figur 3 graphisch dargestellt.

Tabelle 1

| Abstand vom Außenrand in µm | mittlere freie Weglänge in µm | Std.-abw. (+/–) |
|---|---|---|
| 3.09 | 0.32 | 0.26 |
| 6.19 | 0.34 | 0.26 |
| 10.47 | 0.39 | 0.30 |
| 16.66 | 0.60 | 0.46 |
| 20.94 | 0.67 | 0.52 |
| 26.18 | 0.93 | 0.74 |
| 30.94 | 1.46 | 1.32 |
| 38.79 | 1.43 | 1.10 |
| 48.31 | 2.04 | 1.62 |
| 57.12 | 2.52 | 1.74 |
| 85.68 | 4.64 | 3.43 |
| 114.24 | 6.99 | 4.19 |
| 145.18 | 6.53 | 5.14 |
| 180.88 | 7.03 | 3.85 |
| 209.44 | 7.35 | 3.92 |
| 242.28 | 6.34 | 4.81 |
| 248.71 | 1.74 | 1.88 |
| 254.18 | 0.50 | 0.44 |

Durch Auswahl unterschiedlicher Verfahrensparameter können erfindungsgemäße Membranen hergestellt werden, deren Asymmetriefaktor zwischen 0,01 und 2,0 liegt.

Dabei wird vorausgesetzt, daß das Verhältnis der maximalen mittleren freien Weglänge zum Durchmesser der maximalen Pore größer als 3, vorzugsweise zwischen 5 und 100, ist, daß also eine deutliche Asymmetrie des Porensystems erkennbar ist. Zugleich ist es erforderlich, daß sich die Porengröße nicht sprunghaft sondern gleichmäßig ändert.

Figur 4 und Figur 5 zeigen beispielhaft typische TEM-Aufnahmen einer erfindungsgemäßen Membran, wie sie zur Bildauswertung für die Bestimmung der mittleren freien Weglänge verwendet werden.

Vorzugsweise werden die erfindungsgemäßen Membranen dadurch erhalten, daß sie aus einem wenigstens 15 Gew.-% ε-Caprolactam enthaltenden Gemisch gebildet wurden.

ε-Caprolactam ist eine bei ca. 70 °C schmelzende hygroskopische Substanz mit einem Siedepunkt (bei Normaldruck, von 268,5 °C. Es ist in Wasser und zahlreichen organischen Lösungsmitteln, wie beispielsweise Toluol, Isopropanol, Glycerin, Polyäthylenglykol, Butyrolacton, Propylencarbonat, Aethylacetat, Methyläthylketon oder Cyclohexan gut löslich. Es wird großtechnisch in erheblichem Umfange hergestellt und bildet das Monomer für Polyamid-6-Polymere und ist deshalb preisgünstig zugänglich. Unter Ausschluß von Sauerstoff ist ε-Caprolactam thermisch stabil, wenn man davon absieht, daß es bei Temperaturen von 260 - 270 °C in Gegenwart von Wasser unter Ringöffnung eine Polyaddition zum Polyamid-6 eingeht.

Aus seiner Verwendung als Monomer für Polyamid-6 sind die Eigenschaften von ε-Caprolactam gut bekannt. Ebenfalls gut bekannt ist die Rückgewinnung von ε-Caprolactam aus wäßrigen Lösungen.

ε-Caprolactam ist eine sehr wenig toxische Substanz. Man ist der Ansicht, daß beim Umgang mit ε-Caprolactam, abgesehen von der Belästigung durch den bitteren Geschmack und einer möglichen Schleimhautreizung durch ε-Caprolactam-Pulver auch bei wiederholter Einwirkung keine Gesundheitsgefahr besteht. Wegen der guten Löslichkeit, lassen sich eventuelle Reste vollständig aus den mit ε-Caprolactam gebildeten Membranen entfernen.

ε-Caprolactam unterscheidet sich von den üblicherweise für Polyäthersulfonmembranen eingesetzten aprotischen Lösungsmitteln durch das vorhandene Proton am Stickstoffatom und dadurch, daß es den Lösungen eine relativ hohe Viskosität verleiht.

Die erfindungsgemäßen Polyäthersulfonmembranen können hydrophob oder in besonderer Ausgestaltung der Erfindung hydrophil ausgebildet werden. Diese besondere Ausgestaltung kann darin bestehen, daß bei der Membranbildung im Gemisch hydrophilierende Zusatzstoffe zugesetzt waren.

Eine andere Ausgestaltung der Erfindung, die zu hydrophilen Membranen führt, besteht darin, daß das eingesetzte Polyäthersulfon wenigstens teilweise sulfoniert ist.

Gegenstand der Erfindung ist auch ein Verfahren zur Herstellung der erfindungsgemäßen Membran.

Die Herstellung der erfindungsgemäßen Membran erfolgt durch Lösen von 12 bis 35 Gew.-%, bezogen auf die Gesamtlösung, Polyäthersulfon in einem Gemisch, bestehend aus 15 bis 65 Gew.-% ε-Caprolactam, 0 bis 85 Gew.-% latentem Lösungsmittel, 0 bis 15 Gew.-% Verdicker und 0 bis 50 Gew.-% Nichtlöser, gegebenenfalls bis zu 1 Gew.-% Hilfsstoffen, jeweils bezogen auf das Gemisch und Verformen der Lösung zu Flachfolien, Schlauchfolien oder Hohlfäden (diese vorzugsweise unter Zuhilfenahme einer Innenflüssigkeit), und Überführung in die feste Phase und Entfernung des das Lösungsmittel bildenden Gemisches.

Polyäthersulfone, die erfindungsgemäß eingesetzt werden, werden durch nachfolgende allgemeine Formel repräsentiert.

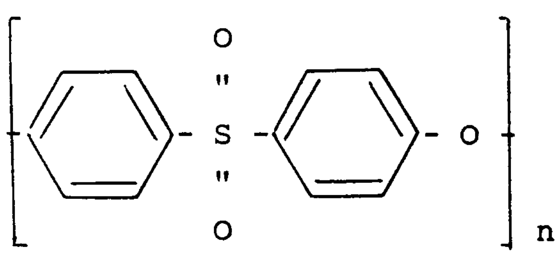

Sie können gegebenenfalls substituiert sein. Insbesondere kann das Molekül auch teilweise sulfoniert sein. Das Polymer kann auch ein Copolymer sein, wobei insbesondere eine Cokondensation mit Polyäthern infrage kommt.

Unter latenten Lösungsmitteln werden im Rahmen der vorliegenden Erfindung solche Stoffe verstanden, die das membranbildende Polymer nur schlecht oder bei erhöhter Temperatur lösen. Beispiele für solche latenten Lösungsmittel sind Butyrolacton oder Propylencarbonat.

Unter Verdickern werden solche Stoffe verstanden, die die Viskosität der Lösung erhöhen. Beispiele für Verdicker bei den hier betrachteten Lösungen sind Polyvinylpyrrolidon, Polyäthylenglykol, Polyacrylsäure und Polyacrylate.

Nichtlöser im Rahmen der vorliegenden Erfindung sind beispielsweise Wasser, Glycerin, Triacetin, Äthyllactat und Polyäthylenglykol.

Hilfsstoffe im Rahmen der vorliegenden Erfindung sind übliche Stabilisatoren, Nucleierungsmittel, Pigmente u.ä.

Vorzugsweise erfolgt das Lösen des Polymeren bei Temperaturen von 60 - 140 ° C.

Vorzugsweise wird, bezogen auf die Gesamtlösung, 15 bis 25 Gew.-% Polyäthersulfon in einem Gemisch, das 40 bis 60 Gew.-% $\epsilon$-Caprolactam enthält, gelöst.

Zur Ausbildung des Lumens von Hohlfäden werden in den allermeisten Fällen üblicherweise Innenflüssigkeiten angewendet. Je nach Auswahl der Innenflüssigkeit, kann diese sich bei der vorliegenden Erfindung auch auf die Struktur der der Innenwand benachbarten Zone auswirken.
Dabei spielen die Verarbeitungstemperatur, die Charakteristik der Löser-Nichtlösereigenschaft und die Mischbarkeit mit dem Lösungsmittelgemisch eine wichtige Rolle.

Es ist bei der vorliegenden Erfindung möglich, in einer mit Nichtlöserdämpfen beaufschlagten Klimakammer die verformte Lösung in die feste Phase zu überführen.

In Ausgestaltung der Erfindung ist es außerdem möglich, bei ausreichender Verweilzeit, die Überführung in die feste Phase nach Unterkühlung durch spontane Kristallisation des Lösungsmittelgemisches zu bewirken.

Die Überführung in die feste Phase erfolgt im allgemeinen durch Koagulation der verformten Lösung in einem Nichtlöserbad. In weiterer Ausgestaltung der Erfindung erfolgt die Überführung in die feste Phase durch Koagulation in einem Nichtlöserbad, wobei die Temperatur der Lösung und die Temperatur des Nichtlöserbades 40 - 60 ° C beträgt.

Zur Erhöhung der chemischen Beständigkeit ist es von Vorteil, wenn die Membran ein oder mehrere Stunden bei Temperaturen von 170 - 210 ° C getempert wird.

Gegenstand der Erfindung ist auch die Verwendung der erfindungsgemäßen Polyäthersulfone für die Ultrafiltration und Mikrofiltration. Ultrafiltration und Mikrofiltration betreffen druckgetriebene Membranfiltrationen zur Abtrennung bestimmter Teilchengrößen. Die für Ultrafiltration und Mikrofiltration in der Literatur genannten Teilchengrößenbereiche überdecken sich weitgehend.Auf der Seite 3 des Buches "Synthetic Polymeric Membranes" von Robert E. Kesting, 1971, Fig. 1.2 werden die Membrantrennverfahren mit den zugehörigen Teilchengrößen dargestellt. Diese Darstellung zeigt, daß als Bereich für Ultrafiltration Teilchengrößen ca. 0,003 µm bis 10 µm und für die Mikrofiltration ca. 0,03 µm bis ca. 20 µm in Betracht kommen.

Die erfindungsgemäße Membran kann ohne Einschränkung im Lebensmittelbereich eingesetzt werden, weil sie keine toxisch relevanten Stoffe enthält.

Durch die ausgeprägte Asymmetrie des zellförmigen Porensystems werden hohe Permeabilitäten erreicht, wobei hervorzuheben ist, daß der Fluß durch die Membran weitgehend unabhängig von der Gesamtdicke der Membran ist.

Das in Figur 1 dargestellte Diagramm zeigt, daß trotz erheblich unterschiedlicher Wanddicke sich die Transmembranflüsse nur wenig unterscheiden.

Das in Figur 2 dargestellte Diagrammm zeigt die Erstarrungstemperaturen des Lösungsmittelgemisches in Abhängigkeit von verschiedenen Lösungsbestandteilen.

Im einzelnen sind auf der Ordinate die Erstarrungstemperatur und auf der Abszisse sind die Zusammensetzungen der Lösungsgemische aufgetragen.

Figur 6 sind REM-Aufnahmen (Vergrößerung 350 : 1 und 5000 : 1) einer gemäß Beispiel 1 hergestellten Membran.

Die Figur 7 zeigt ebenfalls REM-Aufnahmen (Vergrößerung 1 : 390 : 1 bzw. 5000 : 1) von erfindungsgemäßen Membranen gemäß Beispiel 5.

Die Erfindung wird anhand der nachfolgenden Beispiele näher erläutert.

Beispiel 1:

Aus 15 Gew.-Teilen handelsübliches Polyäthersulfon (Type Victrex 5200 der Fa. ICI) und 77,5 Gew.-Teilen einer Mischung bestehend aus Caprolactam/Butyrolacton/Glycerin im Gewichtsverhältnis 45,87 : 45,87 : 8,26 sowie 7,51 Gew.-Teilen des Verdickungsmittels Polyvinylpyrrolidon wurde bei ca. 110 ° C eine homogene viskose Lösung gebildet (ca. 28 PaS/20 ° C).

Nach dem Entgasen und der Abkühlung auf die Spinntemperatur von 40 ° C wurde aus dieser Lösung mittels einer Hohlfadendüse unter Verwendung einer flüssigen Innenfüllung Hohlfäden mit unterschiedlichen Wanddicken ausgeformt und sofort in einem auf 40 ° C temp. Wasserbad verfestigt. Nach einer Verweilzeit von ca. 10 - 15 sec im Wasserbad waren die Hohlfäden stabilisiert. Die Extraktion der Lösungsmittel geschah durch Wäsche mit 80 ° C warmen Wasser. Der Trocknung bei ca. 50 ° C war eine Extraktionspassage mit Isopropanol vorgeschaltet.

Die mikroskopische Begutachtung der verschiedenen Kapillardimensionen zeigte bei allen Varianten im Außenbereich der Membran eine ca. 50 - 100 µm dicke feinporige nach Außen offene Struktur, die zur Membranmitte in ein zunehmend großporiges Gefüge überging. Zur Lumenseite verdichten sich die Zellen wieder und bildeten eine offenporige Innenoberfläche aus.

Die Figur 6 gibt den typischen Querschnitt dieser Membran wieder.

In der Tabelle 2 und Figur 6 sind die Transmembranflüsse verschiedener Hohlfäden mit unterschiedlicher Wanddicke gegenübergestellt.

Tabelle 2

| Hohlfäden mit 1,0 mm Innendurchmesser | | | | | | |
|---|---|---|---|---|---|---|
| | Dimension | | Wanddicke mm | max.Pore µm | AF [$\mu m^{-1}$] | Transmembranfluß Wasser $l/m^2 \cdot h \cdot bar$ |
| | $d_i$ mm | $d_a$ mm | | | | |
| A | 1,0 | / 1,28 | 0,14 mm | ~ 0,25 µm | 0,25 | 5972 |
| B | 1,0 | / 1,43 | 0,215 mm | ~ 0,25 µm | 0,17 | 5532 |
| C | 1,0 | / 1,51 | 0,255 mm | ~ 0,25 µm | 0,14 | 4805 |
| D | 1,0 | / 1,56 | 0,28 mm | ~ 0,25 µm | 0,12 | 4362 |
| E | 1,0 | / 1,78 | 0,39 mm | ~ 0,25 µm | 0,09 | 4572 |
| F | 1,0 | / 1,90 | 0,45 mm | ~ 0,25 µm | 0,05 | 4000 |
| G | 1,0 | / 2,18 | 0,59 mm | ~ 0,25 µm | 0,08 | 4000 |
| H | 1,0 | / 2,34 | 0,67 mm | ~ 0,25 µm | 0,07 | 4452 |

Beispiel 2:

Eine Mischung aus 11,25 Gew.-Teilen des in Beispiel 1 verwendeten Polyäthersulfons und 3,75 Gew.-Teilen eines handelsüblichen sulfonierten Polyäthersulfons wurde in Caprolactam/Butyrolacton/Glycerin im Gew.-Verhältnis 48 : 48 : 6 gelöst. Die im übrigen nach der in Beispiel 1 beschriebenen Methode hergestellten Hohlfäden waren sofort wasserbenetzbar. Sie können ohne Hydrophilierung z.B. mit Alkohol für die Filtration von wäßrigen oder anderen hydrophilen Medien eingesetzt werden.

Beispiel 3:

Die nach Beispiel 1 hergestellte Polymerlösung wurde bei Raumtemperatur mittels eines Reverse-Roll-Coaters auf ein Trägerband aufgestrichen und unmittelbar in einem 50 °C warmen Wasserbad verfestigt. Die entstandene Flachmembran wurde in Wasser gewaschen und zwischen 50 - 60 °C getrocknet.

Die wasserbenetzbare Flachmenbran hatte folgende Testwerte:
Membrandicke: 0,15 mm
Transmembranfluß 6,5 $ml/cm^2 \cdot min \cdot bar$
gemessen mit Isopropanol
Transmenbranfluß ca.8000 $l/m^2 \cdot h \cdot bar$
gemessen mit Wasser

Beispiel 4:

Ein handelsübliches Polyäthersulfon wurde in dem in Beispiel 1 angegebenen Lösungsgemisch zu einer 17 Gew.-%igen Lösung gelöst und zu einem Hohlfaden mit einem Außendurchmesser von 1,0 mm und einer Wanddicke von 0,2 mm ausgeformt.

Der erhaltene, mechanisch sehr stabile Hohlfaden hatte einen Transmembranfluß mit Wasser von 4000 $l/m^2 \cdot h \cdot bar$ bei einer maximalen Porengröße von < 0,25 µm.

Beispiel 5:

Eine 15 Gew.-%ige Poyläthersulfonlösung in 17,5 Gew.-Teilen Caprolactam und 82,5 Gew.-Teilen Propylencarbonat mit einem Zusatz von 8,2% Verdicker wurde zu Hohlfäden versponnen. Der relativ geringe Caprolactamanteil verursachte eine sehr langsame Stabilisierung des Fadens. Erst nach einer

Verweilzeit von ca 1 Min war der Hohlfaden soweit verfestigt, daß er mit Wasser extrahiert werden konnte.

Es entstand eine wasserdurchlässige Membran mit asymmetrischer Struktur im Wandquerschnitt. Der Transmembranfluß betrug 5000 l/m² • h • bar. Die erhaltene Membran zeigen die REM-Aufnahmen der Figur 7.

Beispiel 6:

Auf eine kalte Glasplatte wurde eine ca. 40 °C warme Lösung bestehend aus 15 Gew.-Teilen Polyäthersulfon gelöst in 66,75 Gew.-Teilen Caprolactam, 21,25 Gew.-Teilen Butyrolacton und 11 Gew.-Teilen Glycerin ausgestrichen. Beim Abkühlen der Lösung kristallisierte das Lösungsmittel und stabilisierte so die ausgebildete Membran. Nach Extraktion mittels Wasser entstand eine offenporige, durchlässige Membran.

**Patentansprüche**

**1.** Integrale Polyäthersulfonmembran mit einem an den äußeren Begrenzungen offenen Porensystem in Form von Flachfolien, Schlauchfolien oder Hohlfäden mit einem maximalen Porendurchmesser von 0,02 µm bis 2 µm, gemessen mit der Blaspunktmethode, dadurch gekennzeichnet, daß das Porensystem durchgehend zellförmig mit polyedrisch symmetrisch begrenzten Zellen ist und die Zellen von einer zur anderen Oberfläche der Membran asymmetrisch angeordnet sind, wobei der auf den maximalen Porendurchmesser bezogenen Asymmetriefaktor AF 0,01 bis 2,0 beträgt, und das Verhältnis der maximalen mittleren freien Weglänge des Strömungsweges zum Durchmesser der maximalen Pore größer als 3 ist und von einer Oberfläche zur anderen Oberfläche die Zellgröße sich gleichmäßig ändert.

**2.** Integrale Polyäthersulfonmembran nach Anspruch 1, dadurch gekennzeichnet, daß das Verhältnis der maximalen mittleren freien Weglänge des Strömungsweges zum Durchmesser der maximalen Poren 5 - 100 beträgt.

**3.** Integrale Polyäthersulfonmembran nach Anspruch 1 oder 2, dadurch gekennzeichnet, daß sie aus einem wenigstens 15 Gew.-% ε-Caprolactam enthaltenden Gemisch gebildet wurde.

**4.** Integrale Polyäthersulfonmembran nach einem oder mehreren der Ansprüchen 1 bis 3, dadurch gekennzeichnet, daß die Durchgänge zu benachbarten Zellen abgerundet sind.

**5.** Integrale Polyäthersulfonmembran nach einem oder mehreren der Ansprüche 1 bis 4, dadurch gekennzeichnet, daß bei der Membranbildung im Gemisch hydrophilierende Zusatzstoffe zugesetzt waren.

**6.** Integrale Polyäthersulfonmembran nach einem oder mehreren der Ansprüche 1 bis 4, dadurch gekennzeichnet, daß das eingesetzte Polyäthersulfon wenigstens teilweise sulfoniert ist.

**7.** Integrale Polyäthersulfonmembran nach einem oder mehreren der Ansprüche 1 bis 6, dadurch gekennzeichnet, daß die maximale Porengröße 0,05 bis 0,5 µm beträgt.

**8.** Verfahren zur Herstellung der Polyäthersulfonmembran nach einem oder mehreren der Ansprüche 1 bis 7, durch Lösen von 12 bis 35 Gew.-%, bezogen auf die Gesamtlösung, Polyäthersulfon in einem Gemisch, bestehend aus 15 bis 65 Gew.-% ε-Caprolactam, 0 bis 85 Gew.-% latentem Lösungsmittel, 0 bis 15 Gew.-% Verdicker und 0 bis 50 Gew.-% Nichtlöser, gegebenenfalls bis zu 1 Gew.-% Hilfsstoffen, jeweils bezogen auf das Gemisch und Verformen der Lösung zu Flachfolien, Schlauchfolien oder Hohlfäden (diese vorzugsweise unter Zuhilfenahme einer Innenflüssigkeit), und Überführung in die feste Phase und Entfernung des das Lösungsmittel bildenden Gemisches.

**9.** Verfahren nach Anspruch 8, dadurch gekennzeichnet, daß das Lösen des Polymeren bei Temperaturen von 60 bis 140 °C erfolgt.

**10.** Verfahren nach einem der Ansprüche 8 oder 9, dadurch gekennzeichnet, daß, bezogen auf die Gesamtlösung, 15 bis 25 Gew.-% Polyäthersulfon in einem Gemisch, das 40 bis 60 Gew.-% ε-Caprolactam enthält, gelöst wird.

11. Verfahren zur Herstellung der Polyäthersulfonmembran nach einem oder mehreren der Ansprüche 8 bis 10, dadurch gekennzeichnet, daß die Überführung in die feste Phase nach Unterkühlung spontan durch Kristallisation des Lösungsmittelgemisches bewirkt wird.

12. Verfahren zur Herstellung der Polyäthersulfonmembran nach einem oder mehreren der Ansprüche 8 bis 10, dadurch gekennzeichnet, daß die Überführung in die feste Phase durch Koagulation in einem Nichtlöserbad bewirkt wird, wobei die Temperatur der Lösung und die Temperatur des Nichtlöserbades 40 bis 60 °C beträgt.

13. Verfahren zur Herstellung der Polyäthersulfonmembran nach einem oder mehreren der Ansprüche 8 bis 12, dadurch gekennzeichnet, daß die Membran ein oder mehrere Stunden bei Temperaturen von 170 - 210 °C getempert wird.

14. Verwendung der Polyäthersulfonmembran nach einem oder mehreren der Ansprüche 1 bis 7 und hergestellt nach einem Verfahren gemäß einem oder mehreren der Ansprüche 8 bis 13 zur Ultrafiltration und Mikrofiltration.

**Claims**

1. An integral polyethersulphone membrane, with a pore system open at the external boundaries, in the form of flat films, tubular films or hollow fibres with a maximum pore diameter of 0.02 µm to 2 µm measured by the bubble point method, characterized in that the pore system is continuously cellular with cells with polyhedrally symmetrical boundaries and the cells are arranged asymmetrically from one surface of the membrane to the other, wherein the asymmetry factor AF with reference to the maximum pore diameter is 0.01 to 2.0, the ratio of the maximum mean free path of the flow route to the diameter of the maximum pore exceeds 3 and the cell size changes uniformly from one surface to the other.

2. An integral polyethersulphone membrane according to claim 1, characterized in that the ratio of the maximum mean free path of the flow route to the diameter of the maximum pores is 5-100.

3. An integral polyethersulphone membrane according to claim 1 or 2, characterized in that it has been formed from a mixture containing at least 15 wt% ε-caprolactam.

4. An integral polyethersulphone membrane according to one or more of claims 1 to 3, characterized in that the passages to neighbouring cells are rounded.

5. An integral polyethersulphone membrane according to one or more of claims 1 to 4, characterized in that in formation of the membrane hydrophilizing additives are added to the mixture.

6. An integral polyethersulphone membrane according to one or more of claims 1 to 4, characterized in that the polyethersulphone used is at least partly sulphonated.

7. An integral polyethersulphone membrane according to one or more of claims 1 to 6, characterized in that the maximum pore size is 0.05 to 0.5 µm.

8. A process for production of the polyethersulphone membrane according to one or more of claims 1 to 7, by dissolving 12 to 35 wt%, with reference to the total solution, of polyethersulphone in a mixture consisting of 15 to 65 wt% ε-caprolactam, 0 to 85 wt% latent solvent, 0 to 15 wt% thickener and 0 to 50 wt% non-solvent and optionally up to 1 wt% of auxiliary substances, the amounts relating in each case to the mixture, and forming of the solution to flat films, tubular films or hollow fibres (the latter preferably with assistance of an internal liquid), and conversion to the solid phase and removal of the mixture forming the solvent.

9. A process according to claim 8, characterized in that the polymer is dissolved at temperatures of 60 to 140 °C.

10. A process according to one of claims 8 or 9, characterized in that, relating to the total solution, 15 to 25 wt% polyethersulphone is dissolved in a mixture that contains 40 to 60 wt% ε-caprolactam.

11. A process for production of the polyethersulphone membrane according to one or more of claims 8 to 10, characterized in that conversion to the solid phase is caused spontaneously after supercooling by crystallization of the solvent mixture.

12. A process for production of the polyethersulphone membrane according to one or more of claims 8 to 10, characterized in that conversion to the solid phase is caused by coagulation in a non-solvent bath, the temperature of the solution and the temperature of the non-solvent bath being 40 to 60 °C.

13. A process for production of the polyethersulphone membrane according to one or more of claims 8 to 12, characterized in that the membrane is tempered for one or more hours at temperatures of 170-210 °C.

14. The use of the polyethersulphone membrane according to one or more of claims 1 to 7 and produced by a process according to one or more of claims 8 to 13 for ultrafiltration and microfiltration.

**Revendications**

1. Membrane de poly(éther-sulfone) intégrale, avec un système de pores ouvert sur les limites externes, sous la forme de feuille plane, de feuille tubulaire ou de fibre creuse, ayant un diamètre de pore maximal de 0,02µm à 2µm, ledit diamètre étant mesuré par la méthode du point de bulle, caractérisée en ce que le système de pores est un système formant des cellules de manière continue, avec des cellules délimitées symétriquement de manière polyédrique, et les cellules sont disposées de manière asymétrique d'une surface de la membrane à l'autre, le facteur d'asymétrie AF, rapporté au diamètre de pore maximal, atteignant 0,01 à 2,0, le rapport du libre parcours moyen maximal du chemin d'écoulement au diamètre de pore maximal étant supérieur à 3 et la taille de cellule variant régulièrement d'une surface à l'autre surface.

2. Membrane de poly(éther-sulfone) intégrale selon la revendication 1, caractérisée en ce que le rapport du libre parcours moyen maximal du chemin d'écoulement au diamètre de pore maximal atteint 5 à 100.

3. Membrane de poly(éther-sulfone) intégrale selon la revendication 1 ou 2, caractérisée en ce qu'elle est formée à partir d'un mélange renfermant au moins 15% en poids d' ε-caprolactame.

4. Membrane de poly(éther-sulfone) intégrale selon l'une ou plusieurs des revendications 1 à 3, caractérisée en ce que les passages vers des cellules voisines sont arrondis.

5. Membrane de poly(éther-sulfone) intégrale selon l'une ou plusieurs des revendications 1 à 4, caractérisée en ce que sont ajoutés dans le mélange, lors de la formation de la membrane, des additifs hydrophilisants.

6. Membrane de poly(éther-sulfone) intégrale selon l'une ou plusieurs des revendications 1 à 4, caractérisée en ce que le poly(éther-sulfone) utilisé est au moins partiellement sulfoné.

7. Membrane de poly(éther-sulfone) intégrale selon l'une ou plusieurs des revendications 1 à 6, caractérisée en ce que la taille de pore maximale atteint 0,05 à 0,5µm.

8. Procédé de préparation de la membrane de poly(éther-sulfone) selon l'une ou plusieurs des revendications 1 à 7, par dissolution de 12 à 35% en poids, par rapport à la totalité de la solution, de poly(éther-sulfone) dans un mélange constitué de 15 à 65% en poids d' ε-caprolactame, de 0 à 85% en poids d'un solvant latent, de 0 à 15% en poids d'un épaississant, de 0 à 50% en poids d'un non-solvant et éventuellement de jusqu'à 1% en poids de produits auxiliaires, les pourcentages étant rapportés à chaque fois au mélange, mise de la solution sous la forme de feuilles planes, de feuilles tubulaires ou de fibres creuses (ces dernières de préférence à l'aide d'un liquide interne), transformation en phase solide et élimination du mélange formant le solvant.

9. Procédé selon la revendication 8, caractérisé en ce que la dissolution du polymère a lieu à une température de 60 à 140 °C.

**10.** Procédé selon l'une des revendications 8 et 9, caractérisé en ce que l'on dissout 15 à 25% en poids de poly(éther-sulfone), par rapport à la totalité de la solution, dans un mélange renfermant 40 à 60% en poids d' $\epsilon$-caprolactame.

**11.** Procédé de préparation de la membrane de poly(éther-sulfone) selon l'une ou plusieurs des revendications 8 à 10, caractérisé en ce que la transformation en phase solide se produit spontanément, après surfusion, par cristallisation du mélange solvant.

**12.** Procédé de préparation de la membrane de poly(éther-sulfone) selon l'une ou plusieurs des revendications 8 à 10, caractérisé en ce que la transformation en phase solide est produite par coagulation dans un bain de non-solvant, la température de la solution et la température du bain de non-solvant atteignant 40 à 60 ° C.

**13.** Procédé de préparation de la membrane de poly(éther-sulfone) selon l'une ou plusieurs des revendications 8 à 12, caractérisé en ce que la membrane est recuite à une température de 170 à 210 ° C pendant une ou plusieurs heures.

**14.** Utilisation de la membrane de poly(éther-sulfone) selon l'une ou plusieurs des revendications 1 à 7 ou préparée par un procédé selon l'une ou plusieurs des revendications 8 à 13, pour l'ultrafiltration et la microfiltration.

Fig. 1

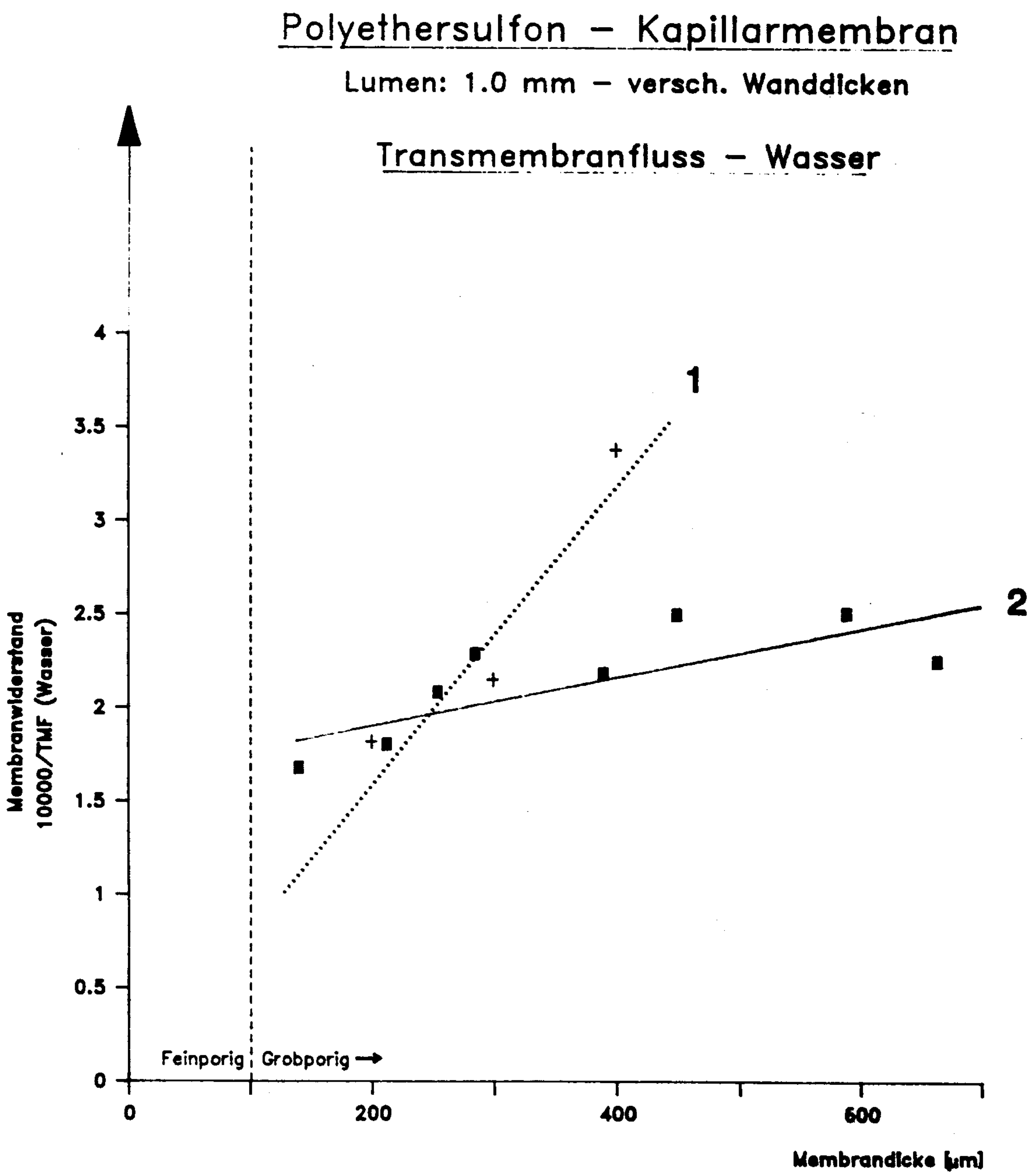
Polyethersulfon - Kapillarmembran
Lumen: 1.0 mm - versch. Wanddicken
Transmembranfluss - Wasser
Membranwiderstand
10000/TMF (Wasser)
4
3.5
3
2.5
2
1.5
1
0.5
0
1
2
Feinporig
Grobporig
0
200
400
600
Membrandicke [µm]

Fig. 2

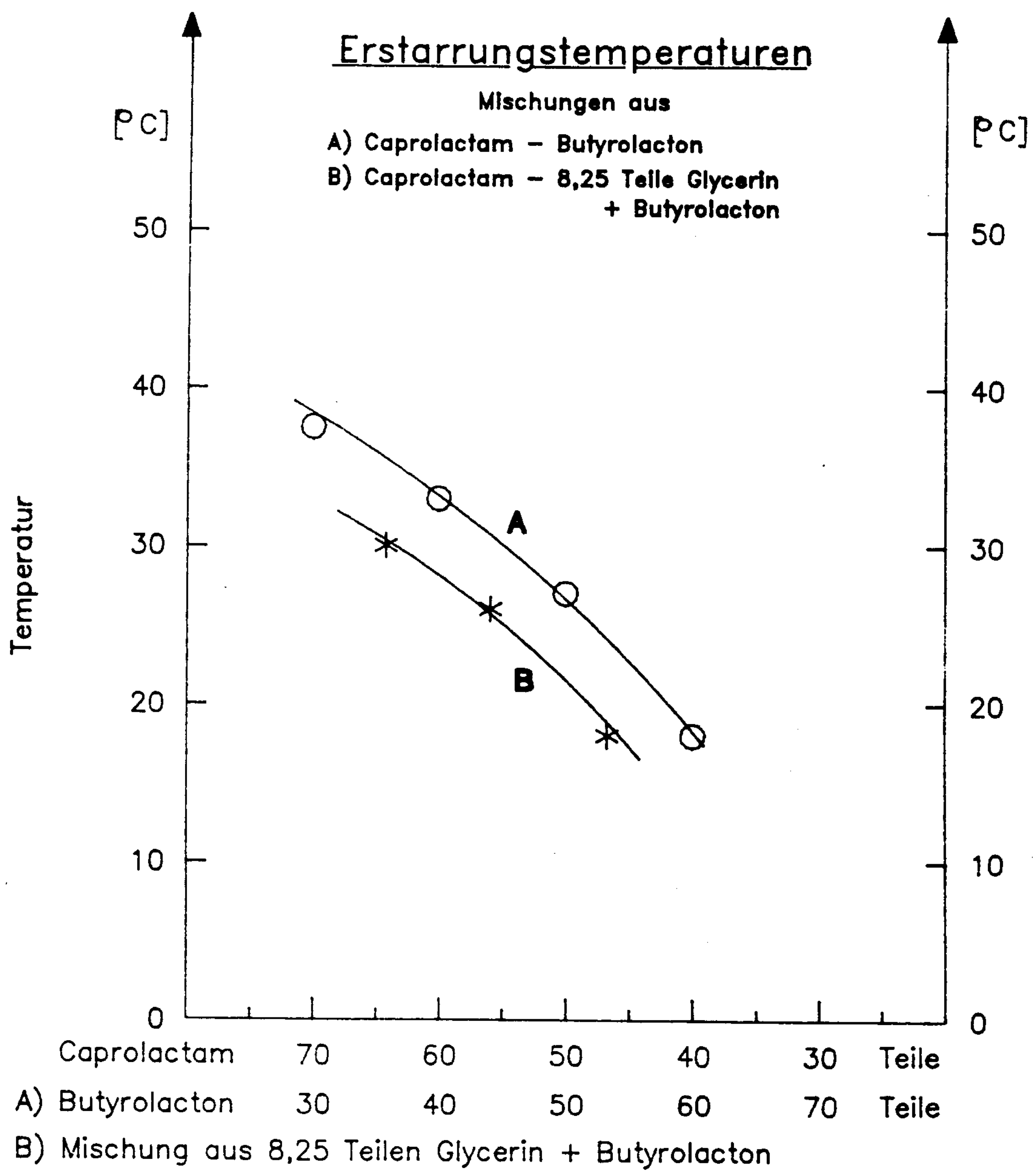
Erstarrungstemperaturen
Mischungen aus
A) Caprolactam - Butyrolacton
B) Caprolactam - 8,25 Teile Glycerin + Butyrolacton
[°C]
Temperatur
50
40
30
20
10
0
A
B
Caprolactam 70 60 50 40 30 Teile
A) Butyrolacton 30 40 50 60 70 Teile
B) Mischung aus 8,25 Teilen Glycerin + Butyrolacton

Fig. 3

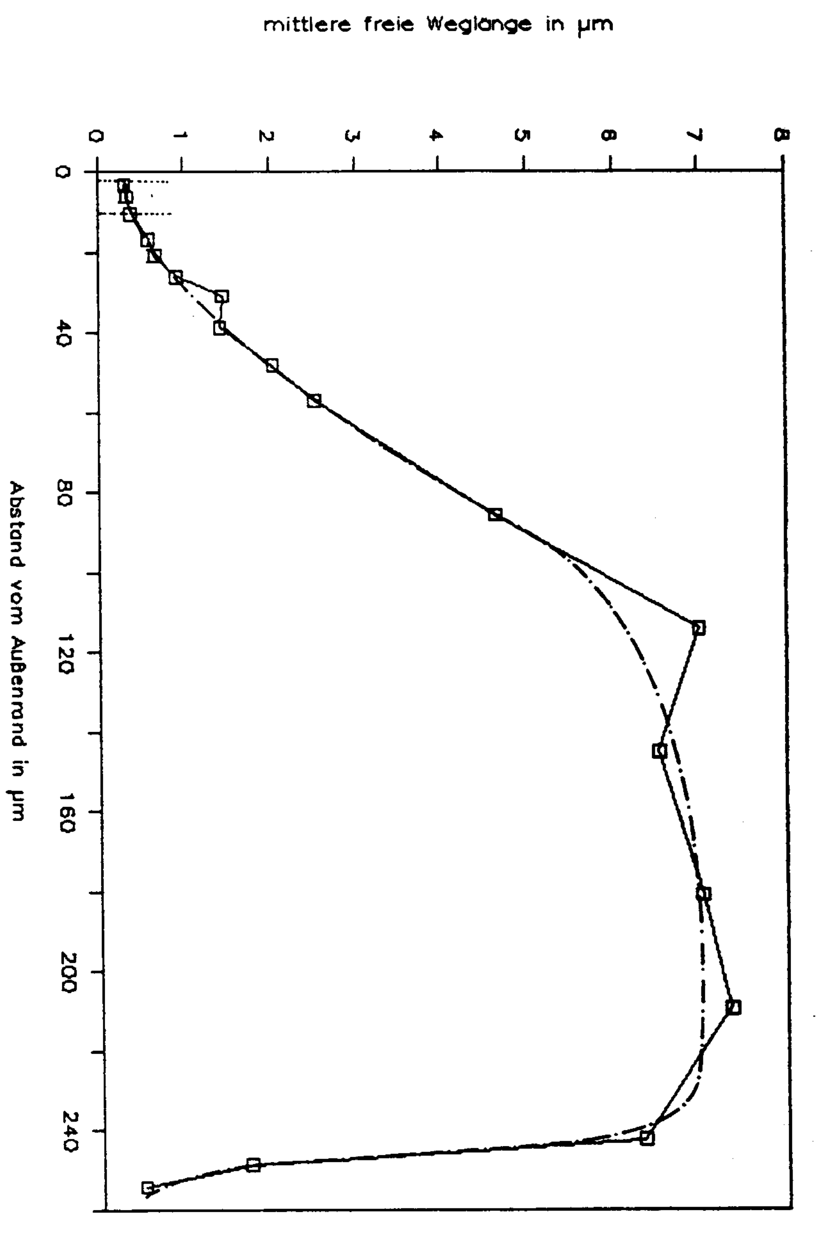
mittlere freie Weglänge in µm
0
1
2
3
4
5
6
7
8
0
40
80
120
160
200
240
Abstand vom Außenrand in µm

Fig. 4

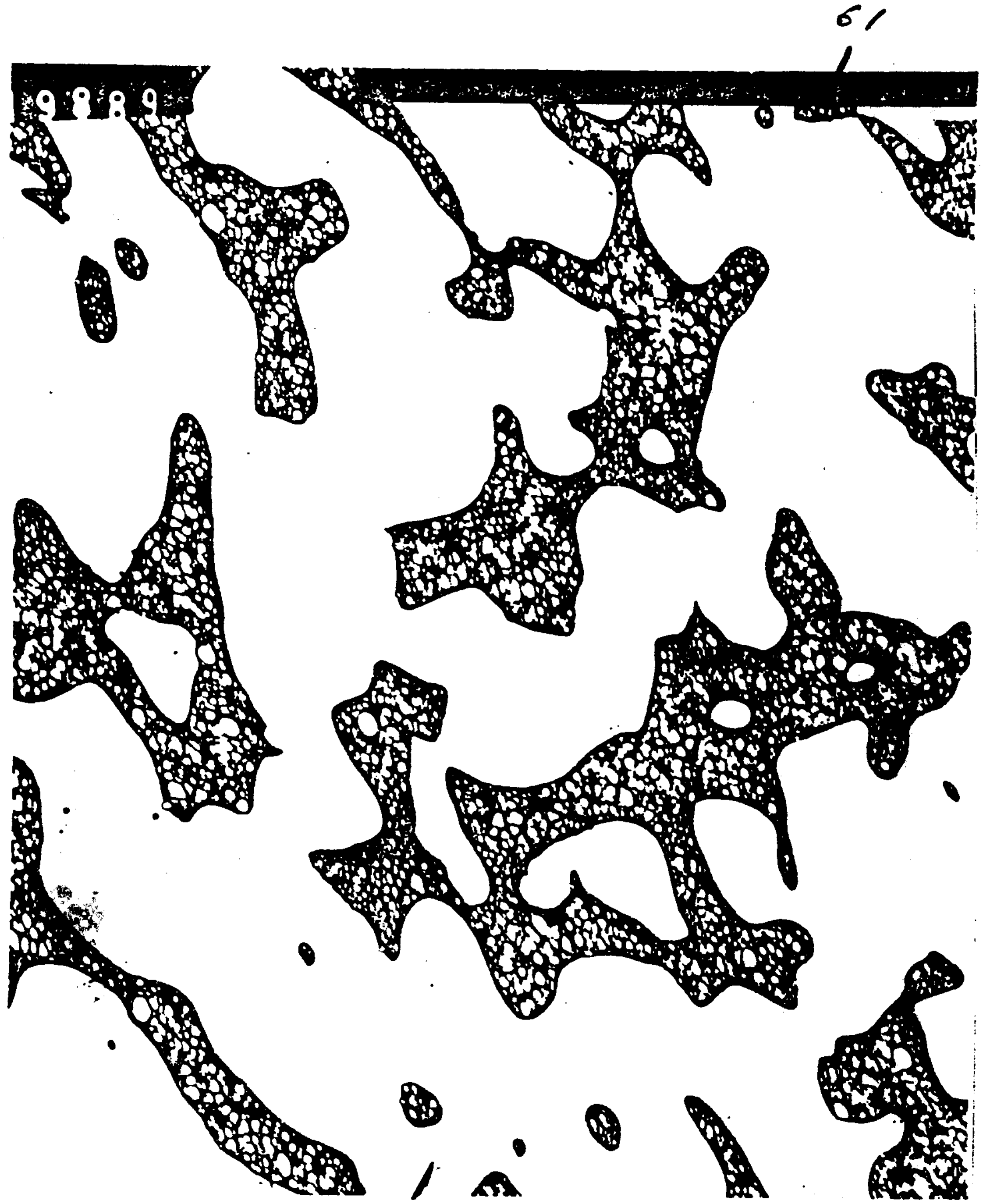

Fig. 5

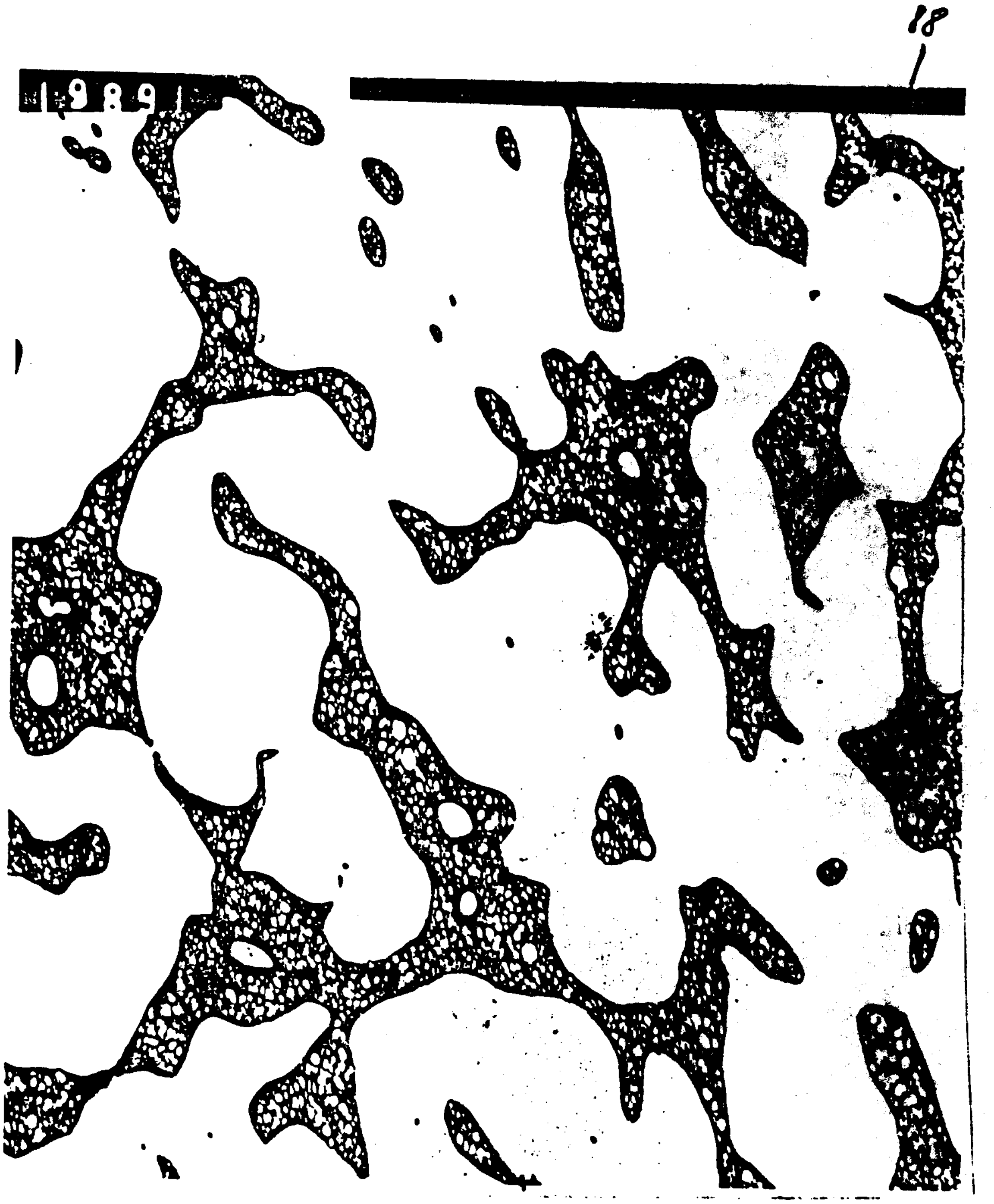

Fig. 6

Bruchflächen

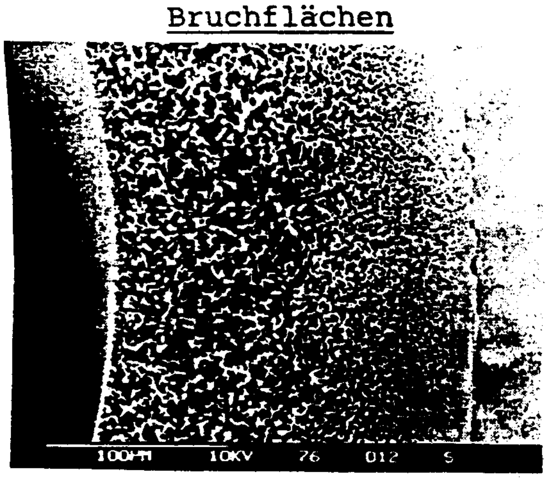

350 : 1

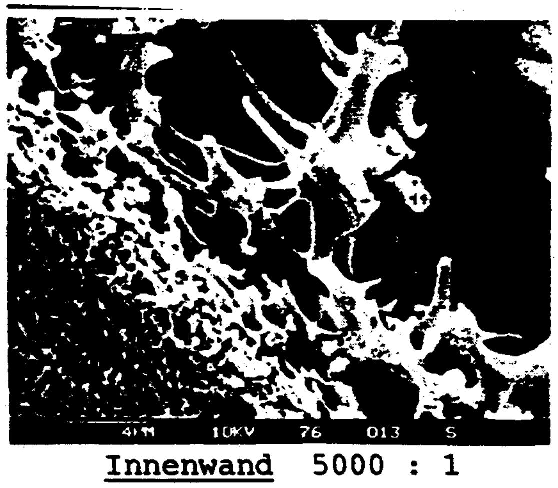

Innenwand 5000 : 1

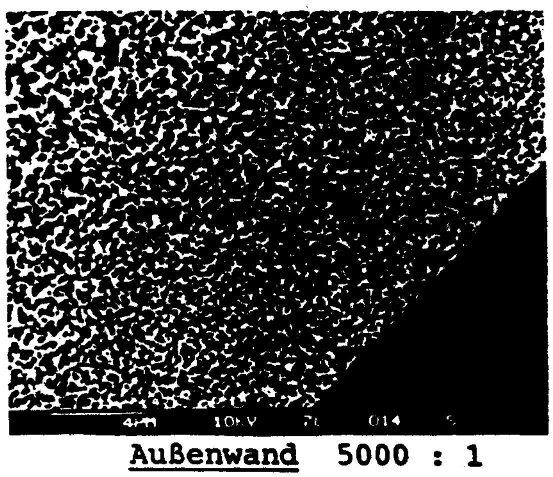

Außenwand 5000 : 1

Oberflächen

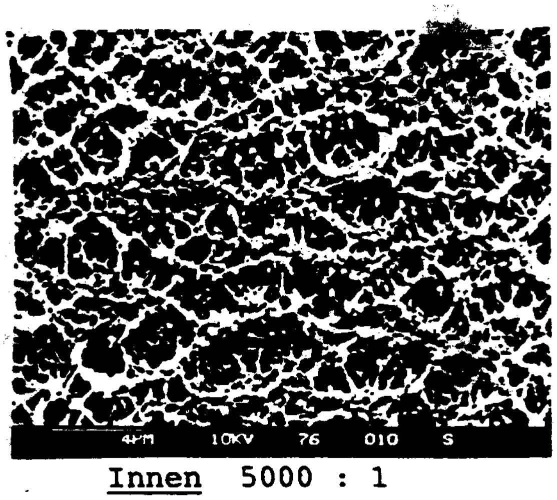

Innen 5000 : 1

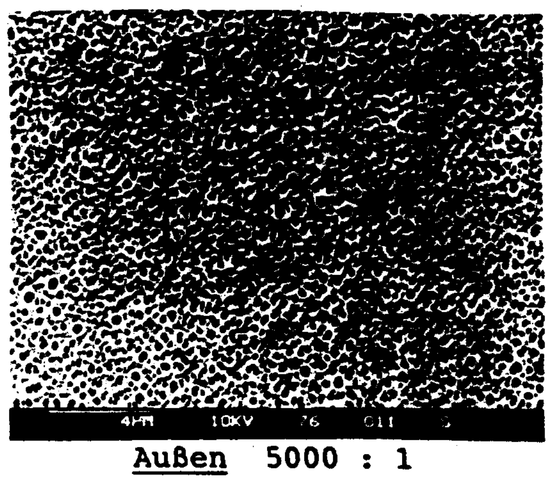

Außen 5000 : 1

Fig. 7

Bruchflächen

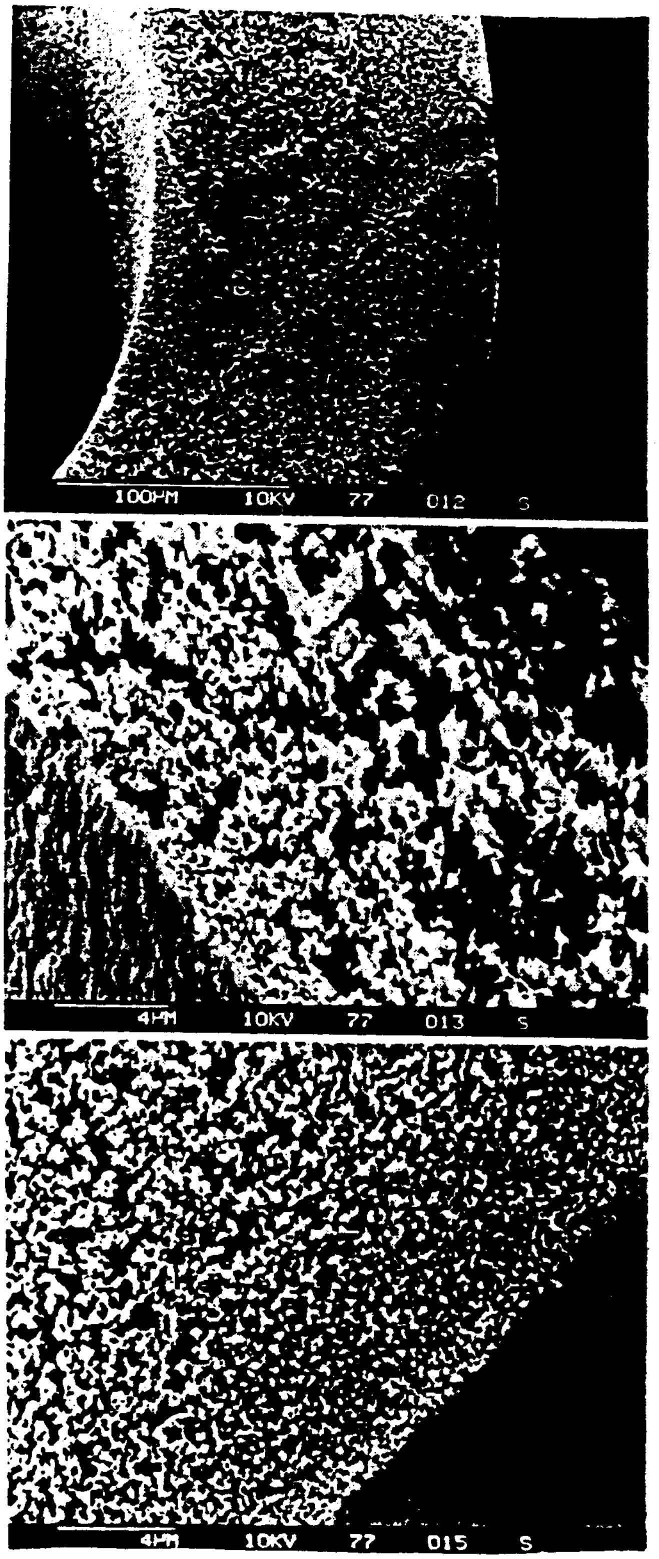


390 : 1

5000 : 1

5000 : 1